(19) Europäisches Patentamt
European Patent Office
Office européen des brevets

(11) **EP 4 644 486 A1**

(12) **EUROPEAN PATENT APPLICATION**
published in accordance with Art. 153(4) EPC

(43) Date of publication:
**05.11.2025 Bulletin 2025/45**

(21) Application number: 23896866.3

(22) Date of filing: **30.11.2023**

(51) International Patent Classification (IPC):
**C08L 85/04** (2006.01)  **C08L 75/04** (2006.01)
**G10K 11/165** (2006.01)  **H04R 9/06** (2006.01)
**H04R 9/02** (2006.01)

(52) Cooperative Patent Classification (CPC):
**C08G 79/08; C08J 9/236; C08L 75/04; C08L 85/04;
G10K 11/165; H04R 9/02; H04R 9/06**

(86) International application number:
**PCT/CN2023/135370**

(87) International publication number:
**WO 2024/114724 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2022  CN 202211515002**

(71) Applicant: SSI New Material (Zhenjiang) Co., Ltd.
Zhenjiang, Jiangsu 212006 (CN)

(72) Inventors:
• **LU, Junran**
  Zhenjiang, Jiangsu 212006 (CN)
• **ZHANG, Lei**
  Zhenjiang, Jiangsu 212006 (CN)
• **GUO, Mingbo**
  Zhenjiang, Jiangsu 212006 (CN)
• **MA, Yuanhong**
  Zhenjiang, Jiangsu 212006 (CN)

(74) Representative: **Isern Patentes y Marcas S.L.**
  **Avda. Diagonal, 463 Bis, 2°**
  **08036 Barcelona (ES)**

(54) **POROUS ACOUSTIC VOLUME INCREASING MATERIAL AND PREPARATION METHOD THEREFOR, LOUDSPEAKER, AND ELECTRONIC DEVICE**

(57)    The present disclosure provides a porous acoustic volume increasing material and a preparation method therefor, a loudspeaker, and an electronic device. The porous acoustic volume increasing material comprises covalent organic frameworks (COFs), wherein the COFs have a thermal decomposition temperature $T_d$ greater than or equal to 300°C, a density greater than or equal to 0.20 g/cc, and a particle specific surface area greater than or equal to 200 m$^2$/g. Acoustic impedance and frequency response analysis tests prove that the porous acoustic volume increasing material comprising the COFs can show excellent low-frequency improvement performance. In particular, the acoustic performance of the porous acoustic volume increasing material comprising the COFs having the specific $T_d$ (i.e., $T_d \geq$ 300°C) is more excellent.

FIG. 13

**Description**

The present application claims priority to Chinese Patent Application No. 202211515002.5, filed with the China National Intellectual Property Administration on November 30, 2022 and entitled "POROUS ACOUSTIC VOLUME INCREASING MATERIAL AND PREPARATION METHOD THEREFOR, LOUDSPEAKER, AND ELECTRONIC DEVICE", which is incorporated herein by reference in its entirety.

TECHNICAL FIELD

The present disclosure relates to a porous acoustic volume enhancing material and a preparation method therefor, a loudspeaker and an electronic device, which belong to the technical field of electroacoustic devices.

BACKGROUND ART

Porous materials can be used in loudspeakers to improve the low-frequency performance. The operating principle relies on the adsorption effect of porous materials to increase the virtual volume constrained by speaker housing.
EP 2424270 B1, EP 1788835 B1 and EP 2003924 B1 respectively disclose loudspeaker systems utilizing zeolite materials and activated carbon materials as virtual volume enhancing materials.
Specifically, EP 2424270 B1 discloses a loudspeaker, which includes an enclosure, and a dynamic driver mounted within the housing. The housing is filled with a zeolite material, resulting in a significant virtual volume enlargement constrained by the housing, that is, increasing the effective volume of the housing. The zeolite material used includes grains that have an average grain size in the range of 0.2 mm to 0.9 mm and have a plurality of zeolite particles bonded together by a binder.
EP 1788835 B1 discloses a loudspeaker system filled with a gas adsorbent that is made of any one of activated carbon, zeolite, silica ($SiO_2$), alumina ($Al_2O_3$), zirconia ($ZrO_2$), magnesium oxide (MgO), iron oxide black ($Fe_3O_4$), molecular sieves, fullerenes and carbon nanotubes.
EP 2003924 B1 discloses a loudspeaker system, in which a gas adsorber, prepared by adding a binder to a porous material comprising a plurality of grains to perform molding, is used to physically adsorb gas in the closed space of the loudspeaker system. The porous material used may be made of one selected from the group consisting of activated carbon, zeolite, silica ($SiO_2$), alumina ($Al_2O_3$), zirconia ($ZrO_3$), magnesia (MgO), iron oxide black ($Fe_3O_4$), molecular sieves, fullerenes and carbon nanotubes.
The aforementioned relevant patents all mention the use of inorganic minerals or porous carbon materials as a volume enhancing material of a loudspeaker cavity for increasing the virtual volume of a rear cavity of a loudspeaker. Zeolite and molecular sieves are inorganic minerals with an aluminosilicate as a component and mainly have microporous (< 2 nm) pore channels due to their constituent elements such as silicon, aluminum, phosphorus, oxygen, and other substitutable metals, with a material density generally being 1.07 g/cc or higher. Thus, compared with other organic porous materials, these materials have a large specific gravity, which is not conducive to the lightweight of micro-speakers. Although porous carbon materials such as activated carbon have a slightly lower material density than inorganic porous materials such as zeolite, the porous carbon materials are mostly of an amorphous structure, making it difficult to control the density, pore volume and pore channel size of these materials. As a result, achieving consistent properties of different batches of materials is challenging, and maintaining the stability of material properties is also more difficult.
Therefore, providing a novel porous acoustic volume enhancing material and a preparation method therefor, a loudspeaker and an electronic device has become a technical problem to be urgently solved in the art.

SUMMARY

To address the aforementioned drawbacks and deficiencies, an object of the present disclosure is to provide a porous acoustic volume enhancing material.
Yet another object of the present disclosure is to provide a preparation method for the aforementioned porous acoustic volume enhancing material.
A yet further object of the present disclosure is to provide a loudspeaker, the rear cavity of which is provided with the aforementioned porous acoustic volume enhancing material.
A yet still another object of the present disclosure is to provide an electronic device, comprising a loudspeaker provided with the aforementioned porous acoustic volume enhancing material in the rear cavity thereof.
In order to achieve the above objects, an aspect of the present disclosure provides a porous acoustic volume enhancing material, wherein the porous acoustic volume enhancing material comprises covalent organic frameworks (COFs) material, which have a thermal decomposition temperature $T_d$ greater than or equal to 300°C, a density greater than or equal to 0.20 g/cc, and a particle specific surface area greater than or equal to 200 $m^2/g$.

As a specific embodiment of the aforementioned porous acoustic volume enhancing material of the present disclosure, the covalent organic frameworks comprises a constitutional unit, which comprises one or more of a nitrogen-containing functional group, a carbon-carbon triple bond, a carbon-nitrogen triple bond, a carbon-oxygen double bond, a carbon-carbon double bond, a carbon-nitrogen double bond, a nitrogen-oxygen double bond, etc.

As a specific embodiment of the aforementioned porous acoustic volume enhancing material of the present disclosure, the nitrogen-containing functional group comprises one or more of an amino group, a hydrazino group, an amine group, an amido group, a cyano group, etc.

As a specific embodiment of the aforementioned porous acoustic volume enhancing material of the present disclosure, the covalent organic frameworks comprises a localized conjugation system and/or a long-range conjugated system.

As a specific embodiment of the aforementioned porous acoustic volume enhancing material of the present disclosure, the constitutional unit of the covalent organic frameworks has a functionality greater than or equal to 2.

As a specific embodiment of the aforementioned porous acoustic volume enhancing material of the present disclosure, at least a part of the skeleton structure of the covalent organic frameworks is three-dimensional. For example, at least a part of the skeleton structure of the prepared covalent organic frameworks can be three-dimensional by having a three-dimensional structure in a constitutional unit of the covalent organic frameworks.

As a specific embodiment of the aforementioned porous acoustic volume enhancing material of the present disclosure, the constitutional unit of the covalent organic frameworks comprises a metallic element. In some examples of the present disclosure, the metallic element may be, for example, one or a combination of more of zinc, nickel, copper, iron and other metallic elements.

As a specific embodiment of the aforementioned porous acoustic volume enhancing material of the present disclosure, the covalent organic frameworks has a particle specific surface area greater than or equal to 400 $m^2$/g and a particle size of 1 nm - 50 $\mu$m, and has periodically arranged pore channels, at least some of which are interconnected to form a three-dimensional interconnected network, with a pore channel size being 0.4 nm -50 nm and a porosity being 45% -71%.

As a specific embodiment of the aforementioned porous acoustic volume enhancing material of the present disclosure, the porous acoustic volume enhancing material is obtained by bonding a covalent organic frameworks material with an adhesive, followed by forming.

In the porous acoustic volume enhancing material, the mass percentage of the covalent organic frameworks is 50% or more, and the percentage of the adhesive is 50% or less.

In the present disclosure, since the raw covalent organic frameworks powder has a small particle size, which is only 1 nm - 50 $\mu$m, directly using it as a sound-absorbing material, i.e., a porous acoustic volume enhancing material, may lead to powder leakage, affecting other working elements. Therefore, it is necessary to form the raw COF powder together with an adhesive into a larger sound-absorbing material before using same in a loudspeaker system.

As a specific embodiment of the aforementioned porous acoustic volume enhancing material of the present disclosure, the porous acoustic volume enhancing material has a particle size of 150$\mu$m -500 $\mu$m (30-100 mesh), optionally 300$\mu$m -450 $\mu$m (40-60 mesh).

As a specific embodiment of the aforementioned porous acoustic volume enhancing material of the present disclosure, the porous acoustic volume enhancing material includes three types of pore structures: intrinsic pore channels of the covalent organic frameworks, with a size in a range of 0.4 nm -50 nm; pore structures between the crystals in the covalent organic frameworks, with a size in a range of 2nm-50 nm; and packed pores between packed grains formed by the covalent organic frameworks, with a size in a range of 0.1$\mu$m -50 $\mu$m.

As a specific embodiment of the aforementioned porous acoustic volume enhancing material of the present disclosure, the porous acoustic volume enhancing material is granular or blocky.

As a specific embodiment of the aforementioned porous acoustic volume enhancing material of the present disclosure, the covalent organic frameworks included in the porous acoustic volume enhancing material may be one or more covalent organic frameworks.

As a specific embodiment of the aforementioned porous acoustic volume enhancing material of the present disclosure, the covalent organic frameworks is selected from a material having a three-dimensional structure, for example, one or a combination of more of COF-202, BLP-2H, COF-367, COF-500, COF-505, COF-506, COF-DL229, DBA-3D-COF-1, COF-PDI, and COFs with the same connectivity synthesized by modifying (replacing or adding, etc.) a functional group of the constitutional unit of the above covalent organic frameworks.

In another aspect, the present disclosure further provides a preparation method for the aforementioned porous acoustic volume enhancing material. When the porous acoustic volume enhancing material is granular, the preparation method therefor includes:

mixing a covalent organic frameworks and an aqueous solution of a water-soluble organic solvent (e.g., ethanol) in a mass ratio of 10 : 1 - 1 : 10 (optionally 5 : 1 - 1 : 5) to form a first dispersion;

mixing an adhesive and a polar solvent (e.g., water) in a mass ratio of 5 : 1 - 1 : 10 (optionally 2 : 1 - 1 : 4) to form a second dispersion; and

mixing the first dispersion and the second dispersion in a mass ratio of 50 : 1 - 1 : 1 (optionally 20 : 1 - 2 : 1), and then subjecting same to granulation and sieving to obtain a granular porous acoustic volume enhancing material.

When the porous acoustic volume enhancing material is blocky, the preparation method therefor includes:

mixing a covalent organic frameworks material, a low-boiling-range organic solvent, and an aqueous solution of an adhesive to obtain a water-oil emulsion, wherein the water-oil emulsion comprises 10 wt% - 50 wt% of an aqueous phase, and 40 wt% - 90 wt% of the covalent organic frameworks, with the balance being the adhesive and an oil phase; and

pouring the water-oil emulsion into a block-making mold, subjecting same to heat curing at 40-60°C, then drying same, and leaving same to stand at room temperature until the mass of the resulting product is constant, so as to obtain a blocky porous acoustic volume enhancing material.

The covalent organic frameworks itself is porous, which makes it has the function of adsorbing air; and the blocky porous acoustic volume enhancing material can be obtained by bonding the covalent organic frameworks together with an adhesive and then molding same using a conventional block-making mold.

In order to increase the porosity of the porous acoustic volume enhancing material, a low-boiling-range organic solvent is used during the preparation of the blocky porous acoustic volume enhancing material. During the processes of heat curing, the low-boiling-range organic solvent is volatilized upon heating to play a role as a pore-forming agent, generating pores in the porous acoustic volume enhancing material, thereby improving the porosity of the porous acoustic volume enhancing material.

As a specific embodiment of the aforementioned preparation method of the present disclosure, the low-boiling-range organic solvent may be, for example, petroleum ether, dichloromethane, etc.

As a specific embodiment of the aforementioned preparation method of the present disclosure, the adhesives used in the preparation of the granular porous acoustic volume enhancing material and the preparation of the blocky porous acoustic volume enhancing material may be the same or different.

The adhesive mainly includes one or a combination of more of polyacrylic acids (polyacrylates), polyvinyl acetates, polystyrene, polyvinyl alcohol, polyurethane, hypromellose, sodium carboxymethylcellulose, methylcellulose, ethylcellulose, povidone, a gum acacia solution, etc.

As a specific embodiment of the aforementioned preparation method of the present disclosure, a method for granulation includes spray granulation, oil-column forming process, boiling granulation, compression molding, rolling granulation, etc.

As a specific embodiment of the aforementioned preparation method of the present disclosure, the conditions for the spray granulation include a spray pressure of 0.02 MPa to 0.1 MPa, optionally 0.06-0.08 MPa, and a drying temperature of 60°C to 120°C.

As a specific embodiment of the aforementioned preparation method of the present disclosure, the solid contents of the adhesives used in the preparation of the granular porous acoustic volume enhancing material and the preparation of the blocky porous acoustic volume enhancing material may be the same or different; and

the solid content of the adhesive, i.e., the aqueous solution thereof or the second dispersion, is 20 wt%-80 wt%, and the content of the adhesive in the obtained granular porous acoustic volume enhancing material and blocky porous acoustic volume enhancing material may optionally be, for example, 0.5 wt%-10 wt%.

In yet another aspect, the present disclosure further provides a loudspeaker, comprising one or more acoustic sensors and one or more housings, which are combined to form a rear cavity of the loudspeaker, wherein the rear cavity of the loudspeaker is provided with the aforementioned porous acoustic volume enhancing material.

In the present disclosure, the porous acoustic volume enhancing material can be applied to the rear cavity of the loudspeaker by means of spraying or coating, so as to achieve a variety of effects such as sound absorption and shock absorption. During the process of spraying or coating, the porous acoustic volume enhancing material is first added to a solvent such as ethanol to form a dispersion, which is then sprayed or coated.

In yet still another aspect, the present disclosure further provides an electronic device, comprising a loudspeaker provided with an aforementioned porous acoustic volume enhancing material in the rear cavity thereof.

As a specific embodiment of the aforementioned electronic device of the present disclosure, the electronic device includes a smartphone, a TWS headphone, a headset, smart glasses, a smart watch, a VR device, an AR device, a tablet computer, or a thin-and-light notebook computer.

The porous acoustic volume enhancing material provided by the present disclosure comprises covalent organic frameworks materials (COFs). The COFs are constructed by connecting light elements such as C, O, N and B via covalent bonds and have a stable skeleton structure and excellent heat resistance and hydrolysis resistance; moreover, compared with existing powdery sound-absorbing materials, the COFs have a lower material density, a larger particle specific surface area and a pore channel structure with a wider pore size distribution range, and thus can be used as a sound-absorbing material in place of conventional zeolite molecular sieve materials.

Acoustic impedance and frequency response analysis tests demonstrate that the porous acoustic volume enhancing material comprising the COFs can exhibit excellent low-frequency improvement performance. In particular, the porous acoustic volume enhancing material comprising COFs with the specific $T_d$ (i.e., $T_d \geq 300°C$) has more excellent acoustic performance.

BRIEF DESCRIPTION OF THE DRAWINGS

To illustrate the technical solutions of the examples of the present disclosure or in the prior art more clearly, the accompanying drawings required for describing the examples are briefly described below. Apparently, the accompanying drawings in the following description illustrate some examples of the present disclosure, and a person of ordinary skill in the art may derive other drawings from these accompanying drawings without creative efforts.

FIG. 1 shows a thermogravimetric curve of Sample 1 in test example 1 of the present disclosure.
FIG. 2 shows a thermogravimetric curve of Sample 2 in test example 1 of the present disclosure.
FIG. 3 shows a thermogravimetric curve of Sample 3 in test example 1 of the present disclosure.
FIG. 4 shows an X-ray diffraction spectrum of Sample 1 in test example 2 of the present disclosure.
FIG. 5 shows an X-ray diffraction spectrum of Sample 2 in test example 2 of the present disclosure.
FIG. 6 shows an X-ray diffraction spectrum of Sample 3 in test example 2 of the present disclosure.
FIG. 7 shows a scanning electron microscope image of Sample 1 in test example 3 of the present disclosure.
FIG. 8 shows a scanning electron microscope image of Sample 2 in test example 3 of the present disclosure.
FIG. 9 shows a scanning electron microscope image of Sample 3 in test example 3 of the present disclosure.
FIG. 10 is a graph showing the low-temperature argon adsorption of Sample 1 in test example 4 of the present disclosure.
FIG. 11 is a graph showing the low-temperature argon adsorption of Sample 2 in test example 4 of the present disclosure.
FIG. 12 is a graph showing the low-temperature argon adsorption of Sample 3 in test example 4 of the present disclosure.
FIG. 13 is a graph showing the comparison of frequency response and impedance curves for a standard acoustic cavity with and without Sample A in an application test example of the present disclosure.

DETAILED DESCRIPTION OF THE EMBODIMENTS

It should be noted that the term "comprise/include" and any variations thereof in the specification, claims and accompanying drawings of the present disclosure is intended to cover non-exclusive inclusion, for example, a process, method, system, product or device comprising a series of steps or units is not necessarily limited to those steps or units that are explicitly listed, but may include other steps or units that are not expressly listed or are inherent to such processes, methods, products or devices.

The "range" disclosed in the present disclosure is given in the form of a lower limit and an upper limit. There may be one or more lower limits and one or more upper limits, respectively. A given range is limited by selecting a lower limit and an upper limit. The selected lower limit and upper limit define the boundaries of a specific range. All ranges defined in this way can be combined, that is, any lower limit can be combined with any upper limit to form a range. For example, in the case where ranges of 60-120 and 80-110 are listed for a specific parameter, it should be understood that the ranges of 60-110 and 80-120 can also be predicted. Furthermore, if the minimum values listed for a range are 1 and 2, and the maximum values listed for a range are 3, 4 and 5, all of the following ranges can be predicted: 1-3, 1-4, 1-5, 2-3, 2-4 and 2-5.

In the present disclosure, unless otherwise stated, the numerical range "a-b" denotes all real number values from a to b, inclusive, where a and b are both real numbers. For example, the numerical range "0-5" means that all the real numbers between "0-5" have been listed in the present disclosure, and "0-5" is merely an abbreviated notation of these numerical combinations.

In the present disclosure, unless otherwise specified, all the embodiments and exemplary embodiments mentioned in the present disclosure can be combined with each other to form new technical solutions.

In the present disclosure, unless otherwise specified, all the technical features and exemplary features mentioned in the present disclosure can be combined with each other to form new technical solutions.

To make the objects, technical solutions and advantages of the present disclosure clearer, the present disclosure is further described in detail below with reference to the accompanying tables, accompanying drawings and embodiments. The embodiments described below are a part of, rather than all of, the embodiments of the present disclosure, and are only intended to illustrate the present disclosure and should not be regarded as limiting the scope of the present disclosure. Based on the embodiments of the present disclosure, all other embodiments that can be obtained by those of ordinary skill in the art without creative efforts shall fall within the scope of protection of the present disclosure. The embodiments in which specific conditions are not specified are carried out under conventional conditions or those recommended by the manufacturer. The reagents or instruments used for which manufacturers are not specified are all conventional commercially available products.

Embodiments of COFs particles:

Embodiment 1

This embodiment provided a COFs, i.e., COF-202, which was prepared using a preparation method including specific steps described below.

All experimental operations in this embodiment were carried out within a vacuum glove box and in a nitrogen environment, with a high borosilicate glass tube as a reaction vessel.

The specific experimental procedures included: 0.12 mmol (60.0 mg) of Tetrakis(4-boronophenyl)methane was weighed and placed in a high borosilicate glass tube having an outer diameter of 15 mm and a wall thickness of 3 mm; 0.30 mmol (40 mg) of n-butylsilanetriol was then added, followed by 2.0 mL of a mixed solution of toluene and 1,4-dioxane (at a volume ratio of 2 : 1) as a solvent; the mixture was then flash-frozen with liquid nitrogen (-77 K) and evacuated to about 20 Pa, and the high borosilicate glass tube was sealed at a high temperature, the sealed high borosilicate glass tube having a length of about 16 cm; the reaction raw materials were then maintained at 120°C for reaction for 3 days; and after the reaction, the mixture was centrifuged to obtain a white solid product. Since the entire experiment was conducted in an organic solvent and the reaction was reversible, non-framework guest molecules were present in the product. Thus, it was necessary to filter and purify the product. In this regard, the product was first soaked in anhydrous tetrahydrofuran (about 20 ml) for 8 h, followed by rinsing, filtration and purification operations, the purification operation was repeated 4 times, and finally, the solvent was removed by means of vacuum filtration to give white COFs particles, labeled as Sample 1.

Embodiment 2

This example provided a kind of COFs, i.e., BLP-2H, which was prepared with 1,3,5-tris(4-aminophenyl) borobenzene as a building block by using a preparation method including the following specific steps:

60 mg of 1,3,5-tris(4-aminophenyl) borobenzene was weighed and added to a high borosilicate glass tube, and 4.0 mL of a mixed solution of 1,3,5-trimethylbenzene and toluene (at a volume ratio of 1 : 4) was added as a solvent; after an ultrasonic treatment for 30 min, the mixture was flash-frozen with liquid nitrogen (-77 K) and evacuated to about 20 Pa, and the high borosilicate glass tube was sealed at a high temperature; the system was heated slowly (0.1 °C/min) to 120°C for a reaction for 2 days, and the resulting reaction mixture was centrifuged to give a white fluffy solid product; and the solid product was soaked in anhydrous dichloromethane (about 40 mL) for 24 h, followed by rinsing, filtration and purification operations, the purification operation was repeated twice, and finally, the solvent was removed by means of vacuum filtration to give white COF particles, labeled as Sample 2.

Comparative example 1

This comparative example provided a kind of COFs, i.e., COF-42, which was prepared by using a preparation method including specific steps as described below.

All experimental operations in this comparative example were carried out within a vacuum glove box and in a nitrogen environment, with a high borosilicate glass tube as a reaction vessel.

The specific experimental procedures included: 44 $\mu$mol (5.0 mg) of 1,3,5-triformylbenzene was weighed and placed in a high borosilicate glass tube having an outer diameter of 10 mm and a wall thickness of 2 mm; 65 $\mu$mol (18 mg) of 2,5-diethoxyterephthalohydrazide was then added, followed by a mixed solution consisting of 250.0 mL of 1,4-dioxane and 750 mL of 1,3,5-trimethylbenzene as a solvent; the high borosilicate glass tube was then placed in an ultrasonic bath for 15 min, and 100 mL of a 6 M acetic acid solution was added during the process of sonication; the system was flash-frozen with liquid nitrogen (-77 K) and evacuated to about 20 Pa, and then the high borosilicate glass tube was sealed at a high temperature, the sealed high borosilicate glass tube having a length about 20 cm; the reaction raw materials were then maintained at 120°C for crystallization for 72 h; and the reaction system obtained after the crystallization was then centrifuged or filtered, during which 1,4-dioxane and acetone can be used for washing (for example, the resulting product can be soaked in acetone for 24 h and dried at low pressure at room temperature for 12 h), to give a light yellow solid product, labeled as Sample 3.

Test example 1

In this test example, Samples 1, 2 and 3 were respectively analyzed using thermogravimetry with a thermogravimetric analyzer TG209F1 manufactured by NETZSCH, Germany. The specific process was as follows: preheating the analyzer; weighing 4 mg of a test sample and placing same in an alumina crucible, and placing the alumina crucible in the center of a furnace for analysis with the temperature rising at a rate of 5-10°C/min and a temperature range being set to be 0°C to 800°C to obtain a thermogravimetric curve; and obtaining the thermal decomposition temperature $T_d$ of the samples on the basis of the thermogravimetric curve.

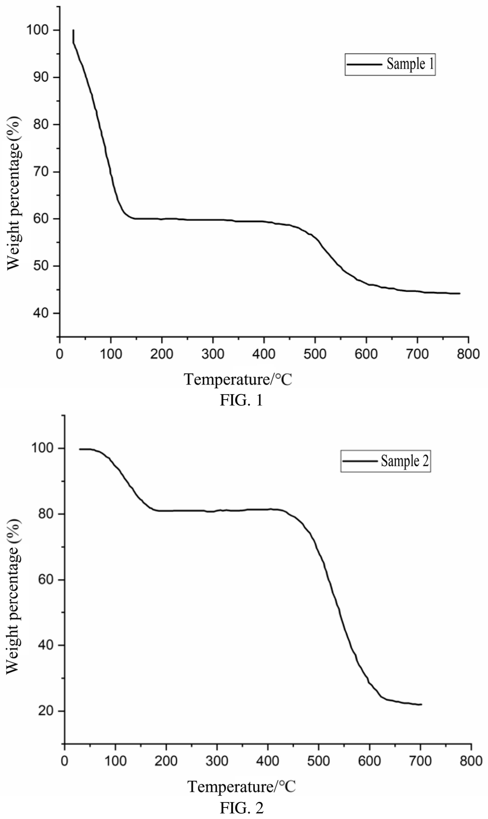

The thermogravimetric curves of Samples 1, 2 and 3 obtained in this test example are shown in FIG. 1 - FIG. 3, respectively. As can be seen from FIG. 1 - FIG. 3, Sample 1 maintained good stability up to 450°C, Sample 2 maintained good stability up to 420°C, and Sample 3 maintained good stability only up to 280°C. That is, the thermal decomposition temperatures Td of Samples 1, 2 and 3 were 450°C, 420°C and 280°C, respectively.

Test example 2

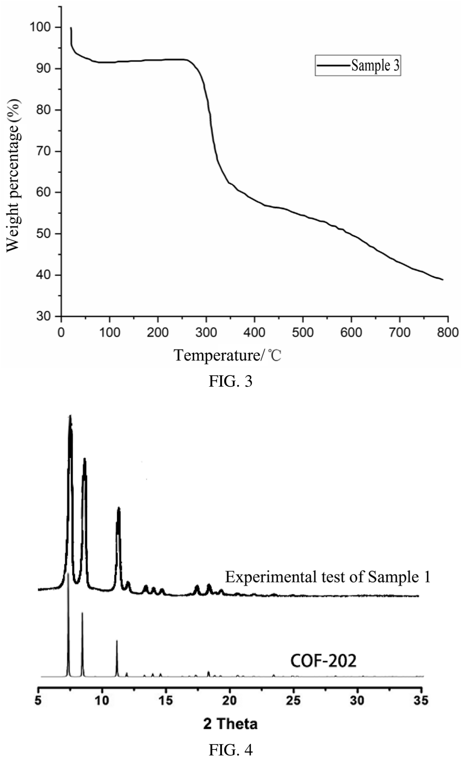

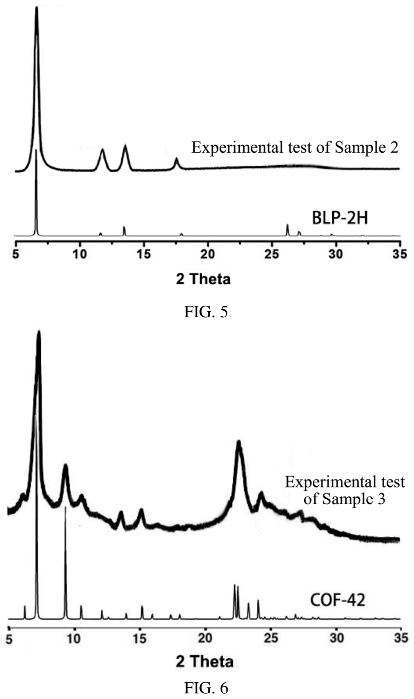

In this test example, Samples 1, 2 and 3 were analyzed using X-ray diffraction, respectively. The obtained X-ray diffraction spectra of Samples 1, 2 and 3 are shown in FIG. 4 - FIG. 6, respectively. As can be seen from FIG. 4 - FIG. 6, the positions of the diffraction characteristic peaks of Samples 1, 2 and 3 matched well with the corresponding standard simulated diffraction pattern thereof, indicating that Samples 1, 2, and 3, i.e., COF-202, BLP-2H, and COF-42, respectively, with good crystallinity for all samples.

Test example 3

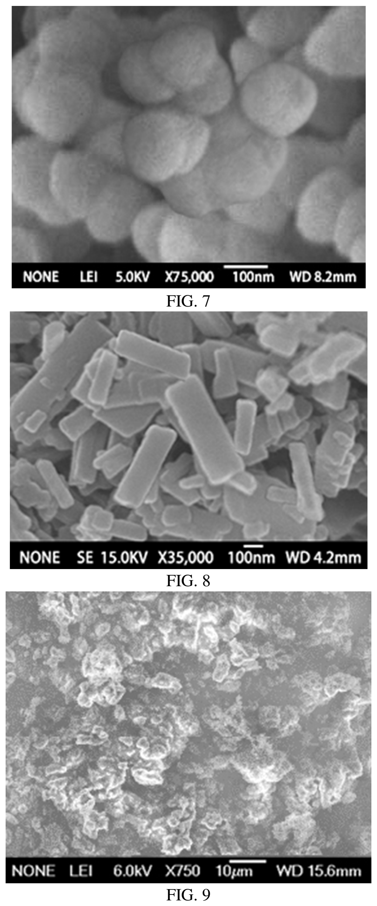

In this test example, Samples 1, 2 and 3 were analyzed using scanning electron microscopy, respectively. The obtained scanning electron microscope images of Samples 1, 2 and 3 are shown in FIG. 7 - FIG. 9, respectively. As can be seen from FIG. 7 - FIG. 9, Samples 1, 2 and 3 all exhibited a well-dispersed state but had different particle sizes. See Table 1 below for details.

Test example 4

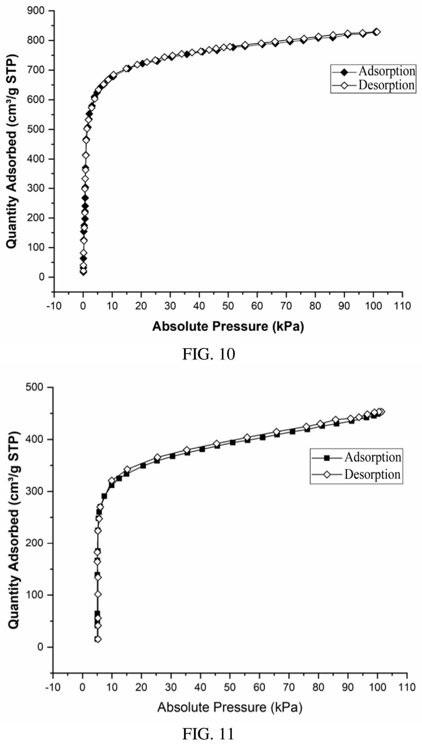

In this test example, Samples 1, 2 and 3 were tested through low-temperature argon adsorption. The low-temperature argon adsorption isotherms of Samples 1, 2 and 3 are shown in FIG. 10 - FIG. 12, respectively. As can be seen from FIG. 10 - FIG. 12, Samples 1, 2 and 3 all had porous structures. In addition, the relevant parameters of Samples 1, 2 and 3 are detailed in Table 1 below.

Table 1

| Sample | Specific surface area/($m^2$/g) | Pore size/ Å | Pore volume/($cm^3$/g) | Density/(g/mL) | Particle size/$\mu$m |
|---|---|---|---|---|---|
| 1 | 2,609 | 11.0 | 1.09 | 0.4791 | 0.1 - 0.5 |
| 2 | 1,087 | 6.4 | 0.59 | 0.9033 | ≤ 1.0 |
| 3 | 710 | 23.0 | 0.31 | 0.5601 | ≤ 5.0 |

As can be seen from Table 1 above, Samples 1, 2 and 3 all have a porous structure and a relatively high specific surface area.

Examples of porous acoustic volume enhancing materials:

Embodiment 3

This embodiment provided a porous acoustic volume enhancing material, which was obtained by bonding Sample 1 with an adhesive, followed by forming. The preparation method included the following specific steps:

mixing the powder of Sample 1 and an aqueous ethanol solution (ethanol : water = 2 : 8 (V : V)) in a mass ratio of 1 : 2 to form a first dispersion;
mixing polyurethane and water in a mass ratio of 1 : 1 to form a second dispersion, in which the adhesive having a solid content of 50 wt%;
mixing the first dispersion and the second dispersion in a mass ratio of 15 : 1, followed by spray granulation at a spray pressure of 0.08 MPa and a drying temperature of 80°C; and after drying, sieving the resulting product to obtain a granular porous acoustic volume enhancing material with a particle size ranging from 200 μm to 450 μm, labeled as Sample A.

In Sample A, the mass percentage of Sample 1 was about 94%, and the percentage of the adhesive was about 6%.

Sample A included three types of pore structures: intrinsic pore channels of the covalent organic frameworks, with a size of 0.64 nm; pore structures between the crystals in the covalent organic frameworks, with a size in a range from 2nm to 50 nm; and packed pores between packed grains formed by the covalent organic frameworks, with a size in a range from 2μm to 10 μm.

Embodiment 4

This embodiment provided a porous acoustic volume enhancing material, which was obtained by bonding Sample 2 with an adhesive, followed by forming. The preparation method included the following specific steps:

mixing the powder of Sample 2 and an aqueous ethanol solution (ethanol : water = 2 : 8 (V : V)) in a mass ratio of 1 : 2 to form a first dispersion;
mixing polyurethane and water in a mass ratio of 1: 1 to form a second dispersion, the adhesive having a solid content of 50 wt%;
mixing the first dispersion and the second dispersion in a mass ratio of 15 : 1, followed by spray granulation at a spray pressure of 0.08 MPa and a drying temperature of 80°C; and after drying, sieving the resulting product to obtain a granular porous acoustic volume enhancing material with a particle size of 200 μm -450 μm, labeled as Sample B.

In Sample B, the mass percentage of Sample 2 was about 94%, and the percentage of the adhesive was about 6%.

Sample B included three types of pore structures: intrinsic pore channels of the covalent organic frameworks, with a size in a range of 0.4 nm -50 nm; pore structures between the crystals in the covalent organic frameworks, with a size in a range from 2nm to 50 nm; and packed pores between packed grains formed by the covalent organic frameworks, with a size in a range from 1μm to 15 μm.

Comparative example 2

This comparative example provided a porous acoustic volume enhancing material, which was obtained by bonding Sample 3 with an adhesive, followed by forming. The preparation method included the following specific steps:

mixing the powder of Sample 3 and an aqueous ethanol solution (ethanol : water = 2 : 8 (V : V)) in a mass ratio of 1 : 2 to form a first dispersion;
mixing polyurethane and water in a mass ratio of 1: 1 to form a second dispersion, the adhesive having a solid content of 50 wt%;
mixing the first dispersion and the second dispersion in a mass ratio of 15 : 1, followed by spray granulation at a spray pressure of 0.08 MPa and a drying temperature of 80°C; and after drying, sieving the resulting product to obtain a granular porous acoustic volume enhancing material with a particle size of 200 μm -450 μm, labeled as Sample C.

In Sample C, the mass percentage of Sample 3 was about 94%, and the percentage of the adhesive was about 6%.

Sample C included three types of pore structures: intrinsic pore channels of the covalent organic frameworks, with a size in a range of 0.4 nm -50 nm; pore structures between the crystals in the covalent organic frameworks, with a size in a range of 2 nm -50 nm; and packed pores between packed covalent organic frameworks, with a size in a range of 4 μm -16 μm.

Application test example

In this test example, Samples A, B and C were respectively filled into a standard acoustic cavity (with a cavity volume of 1.0 cubic centimeters, and a powder filling amount of 140 mg), and acoustic performance tests were then performed. The acoustic performance tests were carried out using conventional methods existing in the art. For example, the acoustic performance of each sample could be tested with reference to the "Measurement of electrical impedance" method described in paragraphs 0049-0054 in Chinese patent application CN 105049997 A. Specifically, each sample was tested according to the "Measurement of electrical impedance" method to obtain an electrical impedance spectrum.

The curve in the electrical impedance spectrum corresponds to an electrical impedance curve, where the frequency corresponding to the highest point of the electrical impedance curve was $F_0$. With the F0 measured when no sample was loaded in the standard acoustic cavity being labeled as $F_{0\text{-cavity}}$, and the measured F0 of a loudspeaker filled with a sample being labeled as $F_{0\text{-sample}}$, the $\Delta$F0 was calculated according to the following formula:

$$\Delta F0 = F_{0\text{-cavity}} - F_{0\text{-sample}}.$$

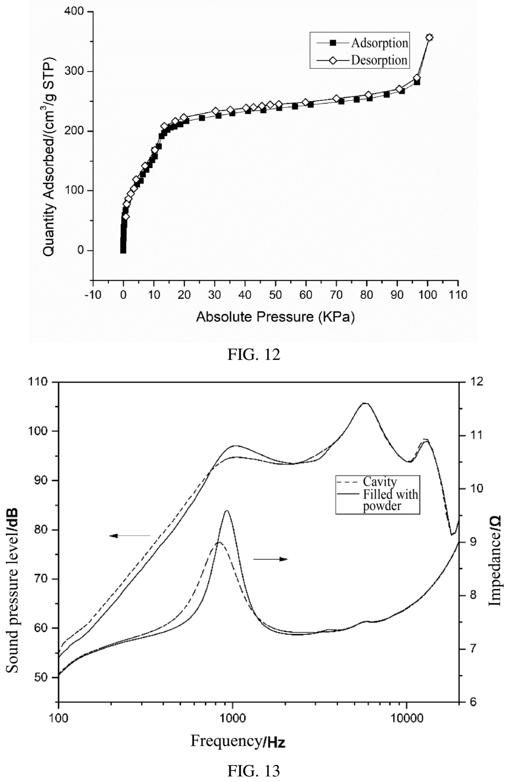

The comparison of frequency response and impedance curves for the standard acoustic cavity without and with Sample A is illustrated in FIG. 13. The acoustic performance test results for Samples A, B and C are shown in Table 2 below.

Table 2

| Sample | Standard acoustic cavity without sound-absorbing grains | Standard acoustic cavity provided with 140 mg of sound-absorbing grains | Reduction value |
|---|---|---|---|
| | $F_0$/Hz | $F_0$/Hz | $\Delta F_0$/Hz |
| Sample A | 925.693 | 832.274 | 93.419 |
| Sample B | 934.531 | 841.235 | 93.296 |
| Sample C (Comparative example) | 925.093 | 884.175 | 40.914 |

As can be seen from Table 2 above, the acoustic impedance and frequency response analysis tests demonstrate that the porous acoustic volume enhancing material comprising COFs can exhibit excellent low-frequency improvement performance. In particular, compared to Sample C provided in the comparative example, the porous acoustic volume enhancing materials comprising COFs with the specific $T_d$ (i.e., $T_d \geq 300°C$), i.e., Samples A and B, have better acoustic performance.

The above are only specific examples of the present disclosure and cannot be regarded as limiting the scope of the implementation of the disclosure; therefore, the replacement of components with equivalent ones, or equivalent changes and modifications made according to the scopes of protection of the present disclosure shall still fall within the scope of the present patent. Additionally, any combination between technical features, a technical feature and a technical invention, and technical inventions in the present disclosure can be freely made for use.

## Claims

1. A porous acoustic volume enhancing material, wherein the porous acoustic volume enhancing material comprises a covalent organic frameworks material, which has a thermal decomposition temperature $T_d$ greater than or equal to 300°C, a density greater than or equal to 0.20 g/cc, and a particle specific surface area greater than or equal to 200 $m^2$/g.

2. The porous acoustic volume enhancing material according to claim 1, wherein the covalent organic frameworks material has a constitutional unit, which comprises one or more functional groups selected from the group consisting of a nitrogen-containing functional group, a carbon-carbon triple bond, a carbon-nitrogen triple bond, a carbon-oxygen double bond, a carbon-carbon double bond, a carbon-nitrogen double bond, and a nitrogen-oxygen double bond; and optionally, the nitrogen-containing functional group comprises one or more groups selected from the group consisting of an amino group, a hydrazino group, an amine group, an amido group, and a cyano group.

3. The porous acoustic volume enhancing material according to claim 1 or 2, wherein the covalent organic frameworks material comprises a localized conjugation system and/or a long-range conjugated system.

4. The porous acoustic volume enhancing material according to claim 1 or 2, wherein the constitutional unit of the covalent organic frameworks material has a functionality greater than or equal to 2.

5. The porous acoustic volume enhancing material according to claim 1 or 2, wherein at least a part of the skeleton structure of the covalent organic frameworks material is three-dimensional.

6. The porous acoustic volume enhancing material according to claim 1 or 2, wherein the constitutional unit of the covalent organic frameworks material comprises a metallic element.

7. The porous acoustic volume enhancing material according to claim 1 or 2, wherein the covalent organic frameworks material has a particle specific surface area greater than or equal to 400 $m^2/g$ and a particle size ranges from 1 nm to 50 $\mu$m, and has periodically arranged pore channels, at least some of the pore channels are interconnected to form a three-dimensional interpenetrating network, with a pore channel size ranges from 0.4 nm to 50 nm and a porosity ranges from 45% to 71%.

8. The porous acoustic volume enhancing material according to claim 1, wherein the porous acoustic volume enhancing material is obtained by bonding the covalent organic frameworks with an adhesive, following by forming; and the covalent organic framework material constitutes 50% or more by weight of the porous acoustic volume enhancing material, and the adhesive constitutes 50% or less.

9. The porous acoustic volume enhancing material according to claim 1 or 8, wherein the porous acoustic volume enhancing material has a particle size ranges from 150$\mu$m to 500 $\mu$m, preferably 300$\mu$m to 450 $\mu$m.

10. The porous acoustic volume enhancing material according to claim 1 or 8, wherein the porous acoustic volume enhancing material comprises three types of pore structures: intrinsic pore channels of the covalent organic frameworks material, with a size in a range of 0.4 nm to 50 nm; pore structures between crystals in the covalent organic frameworks material, with a size in a range of 2 nm to 50 nm; and packed pores between packed grains formed by the covalent organic frameworks material, with a size in a range of 0.1$\mu$m to 50 $\mu$m.

11. The porous acoustic volume enhancing material according to claim 1, wherein the porous acoustic volume enhancing material is granular or blocky.

12. A preparation method for the porous acoustic volume enhancing material according to claims 1-11, wherein when the porous acoustic volume enhancing material is granular, the preparation method therefor comprises:

mixing a covalent organic frameworks material and an aqueous solution of a water-soluble organic solvent in a mass ratio of 10 : 1 to 1 : 10 to form a first dispersion;
mixing an adhesive and a polar solvent in a mass ratio of 5 : 1 to 1 : 10 to form a second dispersion; and
mixing the first dispersion and the second dispersion in a mass ratio of 50 : 1 to 1 : 1, followed by granulation and sieving to obtain a granular porous acoustic volume enhancing material; and
when the porous acoustic volume enhancing material is in a block form, the preparation method therefor comprises:

mixing a covalent organic frameworks material, a low-boiling-range organic solvent, and an aqueous solution of an adhesive to obtain a water-in-oil emulsion,
wherein the water-in-oil emulsion comprises 10 wt% -50 wt% of an aqueous phase and 40 wt% -90 wt% of the covalent organic frameworks material; and
pouring the water-in-oil emulsion into a block-forming mold, thermally curing at 40°C -60°C, and subsequently drying to obtain a blocky porous acoustic volume enhancing material.

13. A loudspeaker, comprising one or more acoustic sensors and one or more housings, which are combined to form a rear cavity of the loudspeaker, wherein the rear cavity of the loudspeaker is provided with the porous acoustic volume enhancing material of any one of claims 1-11.

14. An electronic device, comprising a loudspeaker provided with the porous acoustic volume enhancing material of any one of claims 1-11 in the rear cavity thereof.

15. The electronic device according to claim 14, wherein the electronic device comprises a smartphone, true wireless stereo (TWS) earbuds, an over-ear headphone, smart glasses, a smart watch, a VR device, an AR device, a tablet computer, or a thin-and-light notebook computer.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

## INTERNATIONAL SEARCH REPORT

| | |
|---|---|
| International application No. | |
| | **PCT/CN2023/135370** |

**A.     CLASSIFICATION OF SUBJECT MATTER**

C08L85/04(2006.01)i;  C08L75/04(2006.01)i;  G10K11/165(2006.01)i;  H04R9/06(2006.01)i;  H04R9/02(2006.01)i

According to International Patent Classification (IPC) or to both national classification and IPC

**B.     FIELDS SEARCHED**

Minimum documentation searched (classification system followed by classification symbols)

IPC:C08L,G01K,H04R

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, VEN, CNKI, WEB OF SCIENCE: 共价有机骨架, 共价有机框架, 有机框架, 有机骨架, 增容, 吸声, 扬声, 吸音, 声学, 降噪, 胶黏, 粘合, 聚丙烯酸, 聚醋酸乙烯, 聚苯乙烯, 聚乙烯醇, 聚氨酯, 羟丙甲纤维素, 羧甲纤维素钠, 甲基纤维素, 乙基纤维素, 聚维酮, 阿拉伯胶, 孔, 尺寸, 热分解温度, 密度, 比表面积, COF, COFs, covalent organic framework?, organic framework?, loudersepaker, sound, absor+, denois+, noise reduc+, adhesive, polystyrene, polyacrylic acid, polyvinyl acetate, polyurethane, polyvinyl alcohol, hypromellose, arboxymethylcellulose sodium, methyl cellulose, ethyl cellulose, povidone, gum 2d Arabic, hole, pore, diameter, size, Tg, thermal decomposition temperature, density, specific surface area

**C.     DOCUMENTS CONSIDERED TO BE RELEVANT**

| Category* | Citation of document, with indication, where appropriate, of the relevant passages | Relevant to claim No. |
|---|---|---|
| PX | CN 115806739 A (SSI NEW MATERIAL (ZHENJIANG) CO., LTD.) 17 March 2023 (2023-03-17)<br>  claims 1-15 | 1-15 |
| X | CN 113889062 A (ACC OPTOELECTRONICS TECHNOLOGY (CHANGZHOU) CO., LTD. et al.) 04 January 2022 (2022-01-04)<br>  description, paragraphs [0022]-[0038], and figure 1 | 1-9, 11-15 |
| X | CN 112194962 A (XIAMEN UNIVERSITY) 08 January 2021 (2021-01-08)<br>  embodiment 1 | 1-4, 6, 8 |
| Y | CN 113889062 A (ACC OPTOELECTRONICS TECHNOLOGY (CHANGZHOU) CO., LTD. et al.) 04 January 2022 (2022-01-04)<br>  description, paragraphs [0022]-[0038], and figure 1 | 10, 12-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 February 2024** | **05 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/135370** |

### C. DOCUMENTS CONSIDERED TO BE RELEVANT

| Category* | Citation of document, with indication, where appropriate, of the relevant passages | Relevant to claim No. |
|---|---|---|
| Y | CN 106231511 A (GOERTEK INC.) 14 December 2016 (2016-12-14) description, paragraphs [0007]-[0020] | 10, 12-15 |
| Y | CN 106210999 A (GOERTEK INC.) 07 December 2016 (2016-12-07) description, paragraphs [0007]-[0019] | 10, 12-15 |
| Y | CN 112399289 A (SSI NEW MATERIAL (ZHENJIANG) CO., LTD.) 23 February 2021 (2021-02-23) description, paragraph [0020] | 10, 12-15 |
| Y | CN 215440245 U (SSI NEW MATERIAL (ZHENJIANG) CO., LTD.) 07 January 2022 (2022-01-07) description, paragraphs [0009]-[0015] | 10, 12-15 |
| Y | CN 112423188 A (SSI NEW MATERIAL (ZHENJIANG) CO., LTD.) 26 February 2021 (2021-02-26) description, paragraph [0051] | 10, 12-15 |

## INTERNATIONAL SEARCH REPORT
### Information on patent family members

International application No.

**PCT/CN2023/135370**

| Patent document cited in search report | | | Publication date (day/month/year) | Patent family member(s) | | | Publication date (day/month/year) |
|---|---|---|---|---|---|---|---|
| CN | 115806739 | A | 17 March 2023 | None | | | |
| CN | 113889062 | A | 04 January 2022 | None | | | |
| CN | 112194962 | A | 08 January 2021 | CN | 112194962 | B | 03 August 2021 |
| CN | 106231511 | A | 14 December 2016 | WO | 2018040393 | A1 | 08 March 2018 |
| CN | 106210999 | A | 07 December 2016 | WO | 2018040392 | A1 | 08 March 2018 |
| CN | 112399289 | A | 23 February 2021 | None | | | |
| CN | 215440245 | U | 07 January 2022 | None | | | |
| CN | 112423188 | A | 26 February 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211515002
- EP 2424270 B1
- EP 1788835 B1
- EP 2003924 B1
- CN 105049997 A